# EUROPEAN PATENT SPECIFICATION

(11) **EP 1 519 529 B1**
(45) Date of publication and mention of the grant of the patent: **27.06.2012**
(21) Application number: 03021748.3
(22) Date of filing: 25.09.2003
(51) Int. Cl.: H04L 29/06, G06F 17/30, H04W 12/08

(54) **Content output device providing personalized media content**
Medienausgabevorrichtung zur Bereitstellung von personalisierten Medieninhalten
Dispositif de sortie de contenu pour fournir des contenus multimédia personalisées

(43) Date of publication of application: 30.03.2005
(73) Proprietor: RealNetworks, Inc., Seattle WA 98121 (US)
(72) Inventor: Sighart, Harald, 5081 Anif (AT); Spechtler, Andreas, 5081 Anif (AT)
(74) Representative: Ganahl, Bernhard

(56) References cited:
- WO-A-01/91417
- WO-A-02/03227
- US-A1- 2002 032 019
- US-A1- 2002 068 525
- US-A1- 2002 133 247

## Description

The present invention relates to a content output device and a method to provide content with a content output device, in particular to personal content output devices that receive the output content via a network, such as mobile phone that receives a media stream via a telecommunications network.

An example of such a content output device is a product for 2.5 G and 3 G telecommunications networks, which implements a Software Application (Client - Server) on a mobile phone receiving a media stream, e.g. audio, that is personalized, e.g. audio files selected and played in an order according to a user profile.

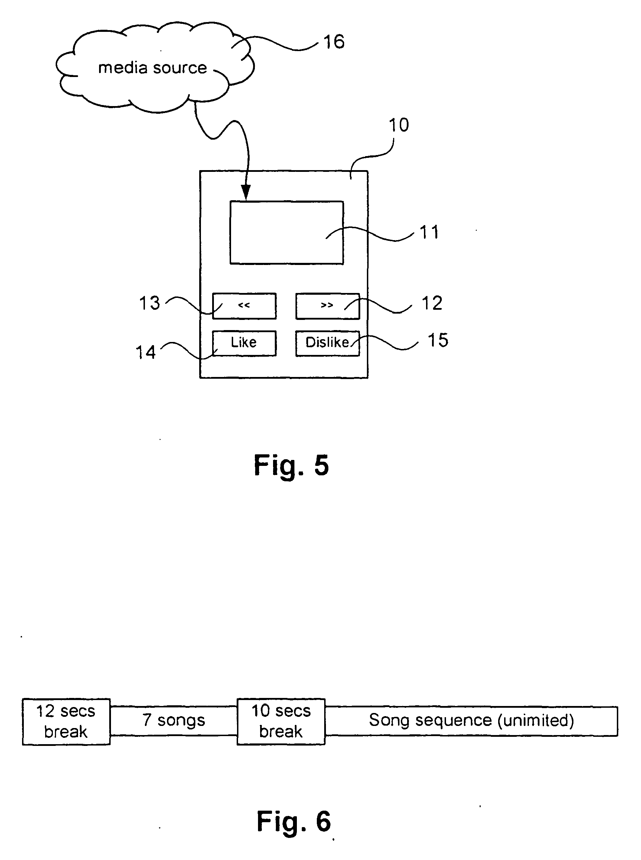

Such a content output device 10, is exemplary shown in Fig. 5. It incorporates a media player 11, here e.g. a music player, and controls for the media player, e.g. 'Skip - Forward' 12, 'Skip - Backward' 13, 'Like' 14, and 'Dislike' 15.

Users of the device 10 trigger an update of the media stream by pressing the controls. The client, i.e. the device 10, contacts a server 16 and requests a new media stream, e.g. when a currently song is rated to be disliked.

Before the new stream can be played, the media stream need to be buffered, i.e. stored, within the device 10, e.g. within device's media player 11. Such a buffering leads to a delay of app. 10 seconds in the user experience. Such a situation is shown in Fig. 6, wherein after a first skip/dislike indication by the user a first break of 12 seconds is performed before a new song sequence that is adapted to this user feedback is output. In the shown case the user again rates this media stream in the seventh song by a second skip/dislike indication, hereafter a 10 seconds break occurs until a newly adapted song sequence is output. As the song sequence output after the first skip/dislike indication, also the song sequence after the second skip/dislike indication is unlimited, i.e. songs will be continuously communicated to the content output device 10 and output from the content output device 10, until a next skip/dislike indication or other feedback or rating of the user to the currently output song sequence is given, in which case the content output device 10 initiates another adaptation of the media stream that carries the song sequence, which leads to another break.

However, these breaks are disturbing the hearing delight for the user and therefore the user might sometimes rather accept a not so liked song than a 10 seconds break. This results in a not properly adapted personalization.

US 2002/0133247 A1 discloses a system and method for seamlessly switching between multiple media streams of multimedia content. A media server transmits a first media stream to a media client and a media player it to a user. At some point, a request to play a second media stream at the media client is detected. A media stream buffer is provided that buffers one or both of the media streams. The media stream buffer enables the media player to continue to play at least one of the media streams while switching between the first media stream and the second media stream. Since the media player continues to play at least one of the media streams to the user without interruption, the switch from the first media stream to the second media stream is thus affected seamlessly. During the time delay between sending the request, receiving the second media stream and playing it for the user, a foreground media player continues to play the first media stream.

US 2002/0032019 A1 relates to a method to compile and deliver customised playlists in near real time. In this method a base channel is used that includes a playlist of content that may be played on the user device. Furthermore, alternate sources of content are used which offer items that are continuous available for the use as substitutions for items of the playlist of the base channel. The user reacts to items of the playlist of the base channel. A side channel is distinct from the base channel which reflects a user preference. The user preference is defined at least in part by the user reactions to items that have played on either of the base channel or the side channel. The base channel and the alternate sources of content are streaming broadcast sources that are available to a plurality of users of data systems. The user device is configured in such a way that the listener may immediately select either one of the base channel and the side channel.

From US 2002/0068525 A1 a computer-based method and a system for dynamically inserting advertising content into a radio broadcast is known. The advertising contents which are called ads, are selected according to personalised data. The ads are inserted dynamically into a stream of audio or video content upon detection of an ad event. The ads are preferably buffered ahead of their need.

Therefore, it is the object underlying the present invention to provide an improved content output device and method to provide content with a content output device.

This object is solved by a content output device according to independent claim 1 and a method to provide content with a content output device according to independent claim 7. Respective preferred embodiments thereof are respectively defined in the respective following sub-claims. A computer program product according to the present invention is defined in claim 11 and a computer readable storage means is defined in claim 12.

Therefore, in a content output device that comprises a media player unit adapted to access content items from a first media source and to provide an output corresponding to said content items, according to the present invention said media player unit is further adapted to access at least one content item from at least one second media source and to provide an output corresponding to said at least one content item in case an output corresponding to said content items from said first media source is requested and not possible or disrupted.

Correspondingly, a method to provide content with a content output device, comprising the step of accessing content items from a first media source and providing an output corresponding to said content items, according to the present invention further comprises the step of accessing at least one content item from at least one second media source and providing an output corresponding to said at least one content item in case an output corresponding to said content items from said first media source is requested and not possible or disrupted.

A content output device according to the present invention is preferably a personal device that can connect to a network, preferably wireless, such as a specially adapted mobile phone or PDA (personal digital assistant). However, according to the present invention also other content output devices are possible, e.g. computers, hi-fi components, television sets, radios, .... Content items according to the present invention might be music items, e.g. songs, uttered messages, melodies, sounds, video items, such as video clips or other motion pictures, with or without sound, pictures, text messages, texts, etc.... That an output corresponding to said content items from said first media source is requested and not possible or disrupted means that e.g. a media stream requested from said first media source needs to be buffered before the first media item is output and/or a preparation time is needed on the side of the first media source to setup the media stream, or that a media stream is broken and will be restored later, i.e. that a content output wanted from a user of the content output device is currently not available, but will be available later, e.g. in a few seconds or minutes.

Therewith, the present invention reduces the experienced delay caused by buffering. In particular, in case this solution enhances the user experience so that the user does not realize that there is a delay due to buffering, a minimization of (experienced) buffering delay in streaming media over network is achieved.

In the content output device according to the present invention preferably said media player unit comprises a first media player to access content items from said first media source and a second media player to access said at least one content item from said second media source.

Therefore, according to this preferred embodiment of the present invention, the reduction of the buffering delay is achieved by utilizing 2 media players on the client. Alternatively, only one media player might be used that has the capability to appropriately access both media sources.

In the content output device according to the present invention alternatively or additionally preferably said first media source is arranged outside said content output device and provides said content items in form of a media stream to said media player unit.

Correspondingly, said method according to the present invention preferably comprises the step of receiving said content items of said first media source in form of a media stream.

In this case the present invention is particular effective, since the initialization of a requested media stream, which is a particular annoying matter for a user, is not recognized as a waiting period.

In the content output device according to the present invention further additionally preferably said content items provided by said first media source are buffered within said media player unit before said media player unit provides an output corresponding to said content items.

Correspondingly, said method according to the present invention further preferably comprises the step of buffering said content items provided by said first media source before providing an output corresponding to said content items.

Also in this case the present invention is particular effective, since not only the initialization of a requested media stream, but also an additional waiting time due to the buffering of an incoming media stream before it can be output is not recognized as a waiting period.

In the content output device according to the present invention still further alternatively or additionally preferably said content items provided by said first media source are personalized to a user of the content output device, wherein the media stream gets changed after a certain feedback of the user, which feedback is provided to the first media source.

In this case the present invention enables the proper collection of a user profile, since users are not discouraged to give feedback to a currently output media stream due to bothersome pauses of media output after feedback is given.

In the content output device according to the present invention still further alternatively or additionally preferably a content item provided by said first media source currently output gets faded out after said certain feedback of the user.

Correspondingly, said method according to the present invention still further preferably comprises the step of fading out a currently output content item after a change of the media stream was initiated.

This particular feature of the present invention further encourages a user to give feedback, since an immediate reaction to the certain feedback is provided, namely that after an indication of e.g. skip/dislike or a comparable feedback the currently output content item, which was actually rated, is not wholly output, but ended in an appropriate way.

In the content output device according to the present invention still further alternatively or additionally preferably said second media source is arranged within said content output device and provides said at least one content item as at least one corresponding direct accessible media file to said media player unit.

Correspondingly, said method according to the present invention still further preferably comprises the step of directly accessing said at least one content item from said second media source.

In this case it is secured that always an output corresponding to content items is available, since in pauses of the output of the streamed content items other content items of the second media source can readily be output.

In the content output device according to the present invention further additionally preferably said second media source is adapted to load or download said at least one content item that is provided by said second media source.

Correspondingly, said method according to the present invention still further preferably comprises the step of loading or downloading said at least one content item that is provided by said second media source so that it can be provided by said second media source.

This particular preferred embodiment of the present invention enables to use different content items to be output in case the output corresponding to the content items supplied by the first media source is requested and not possible or disrupted. In this way it is e.g. also possible to provide the user with varying information each time a user feedback is given. Such an information might be transmitted to the content output device in advance and then be output directly after the feedback to the currently output content item is given. It is also possible that different information items are transmitted in advance and a particular one thereof is output depending on the kind of feedback given.

Alternatively, only one media player might be provided that has the capability to buffer an incoming stream and to simultaneously provide an output of content items already available, e.g. stored. Of course, also these content items already available might be provided via a content item stream, i.e. media stream, which, however, is already in a state to be output.

According to the present invention said at least one content item provided by said second media source is preferably a jingle. A jingle in this sense means a prepared message, in particular a prepared and available audio and/or video item. As stated above, alternatively said at least one content item might also be at least one information item or at least one content item corresponding to the content items of the first media source.

A computer program product according to the present invention comprises computer program means adapted to perform the method steps as set-out above when being executed on a computer, digital signal processor or the like.

A computer readable storage means according to the present invention stores thereon a computer program product as set-out above.

For a better understanding of the invention and to further elucidate the invention, its features, objects and advantages, exemplary preferred embodiments thereof are described in detail by way of example while making reference to the accompanying drawings, wherein:
- Fig. 1: shows a content output device according to an exemplary preferred embodiment of the present invention,
- Fig. 2: shows a content output result of the content output device according to the preferred embodiment of the present invention shown in Fig. 1,
- Fig. 3: shows a flow chart of the content output processing in the content output device according to the preferred embodiment of the present invention shown in Fig. 1,
- Fig. 4: shows a flow chart of implementation details of the content output processing in the content output device according to the preferred embodiment of the present invention shown in Fig. 1,
- Fig. 5: shows a content output device according to the prior art, and
- Fig. 6: shows a content output result of the content output device according to the prior art.

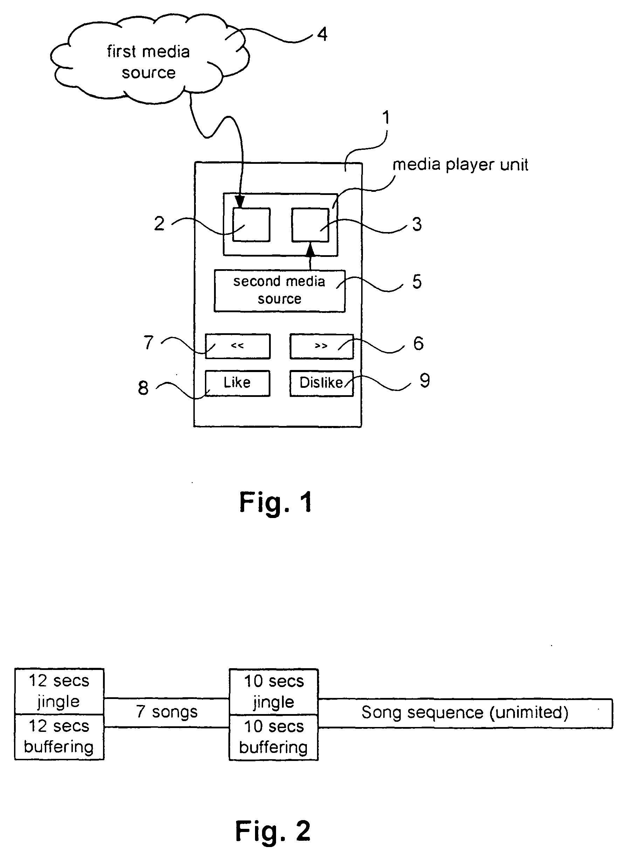

Figure 1 shows a content output device according to an exemplary preferred embodiment of the present invention. Additionally to the content output device shown in and described in connection with Fig. 5, the content output device 1 according the exemplary preferred embodiment of the present invention comprises a second media player and an incorporated second media source.

Therewith, the content output device 1 incorporates a first media player 2 and a second media player 3, here e.g. music players, which together build a media player unit, an access to a first streaming media source 4, a second media source 5 that is incorporated within said content output device 1, and controls for the media players 2, 3, e.g. 'Skip - Forward' 6, 'Skip - Backward' 7, 'Like' 8, and 'Dislike' 9.

As in case of the content output device 10 according to the prior art, users of the content output device 1 according to the present invention trigger an update of a media stream provided from the first media source 4 (server) by pressing the controls. The client, i.e. the content output device 1 according to the present invention, contacts the first media source 4, i.e. the server, and requests a new media stream, e.g. when a currently song is rated to be disliked.

Before the new stream can be played, the media stream need to be buffered, i.e. stored, within the content output device 1 according to the present invention, e.g. within device's first media player 2. Such a buffering leads to a delay of app. 10 seconds until an output corresponding to the incoming stream can be provided. However, according to the present invention no break is disturbing the hearing delight for the user, since this time is filled by an output of the second media player 3 that accesses the second media source 5, which provides content items ready for output, e.g. since these content items are already stored within the content output device 1 according to the present invention or in any other way available in a direct accessible way, e.g. via a broadband connection to a server.

Fig. 2 shows an output of the content output device 1 according to the present invention. When, after a first skip/dislike indication by the user a first buffering of 12 seconds is performed before a new song sequence that is adapted to this user feedback is output, simultaneously a 12 second long jingle is output to the user via the second media player 3. After the buffering is completed the jingle is stopped and the song sequence that is adapted to this user feedback is output. In the shown case the user again rates this media stream in the seventh song by a second skip/dislike indication, hereafter a 10 seconds buffering occurs until a newly adapted song sequence is output. During this 10 seconds buffering again a jingle is output to the user via the second media player 3. As the song sequence output after the first skip/dislike indication, also the song sequence after the second skip/dislike indication is unlimited, i.e. songs will be continuously communicated to the first media player 2 within content output device 1 and be output, until a next skip/dislike indication or other feedback or rating of the user to the currently output song sequence is given, in which case the content output device 1 initiates another adaptation of the media stream that carries the song sequence, which leads to another buffering with simultaneous output of a jingle with corresponding length via the second media player 3.

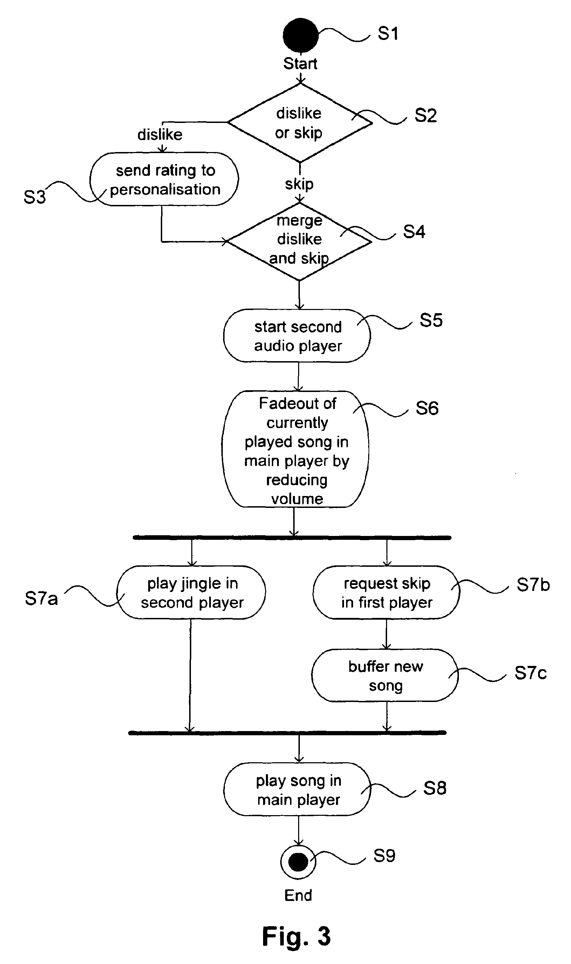

Figure 3 shows a flow chart of the content output processing in the content output device 1 according to the preferred embodiment of the present invention shown in Fig. 1.

In particular, the content output processing is started in a first step S1. Thereafter it is checked in a following second step S2 whether or not a skip/dislike user feedback is input into the content output device 1.

In case of dislike is input, in a following third step S3 an update of the user profile and therewith also of the currently received media stream that is output via the first media player 2 is requested, whereupon a fourth step S4 is performed. In case of skip is input in the second step S2, the processing directly continues with the fourth step S4. In the fourth step S4 the processing for an input of skip or an input of dislike is merged.

After the fourth step s4, a fifth step S5 follows in which the second audio player 3 is started. Then, a sixth step S6 follows in which the currently played song or other content item output by the first media player 2 is faded out, in case of a song e.g. by reducing the volume.

In the following a parallel processing within the first and second media players 2, 3 is performed in a seventh step S7. In particular, in a step S7a the second media player starts the output of a jingle and in a step S7b the first media player requests a skip of the currently streamed song followed by a buffering of a new song in a step S7c. The request of skip the song is also the correct command in case the user indicated that the currently output song is disliked, since in this case a new media stream is generated and therewith the next streamed song considers the changed user profile.

In case the buffering of the new song is completed, the newly buffered song is output by the first media player 2 in a following eighth step S8. Of course, the output of the jingle from the second media player 3 is stopped before. The processing finally ends in a following ninth step S9.

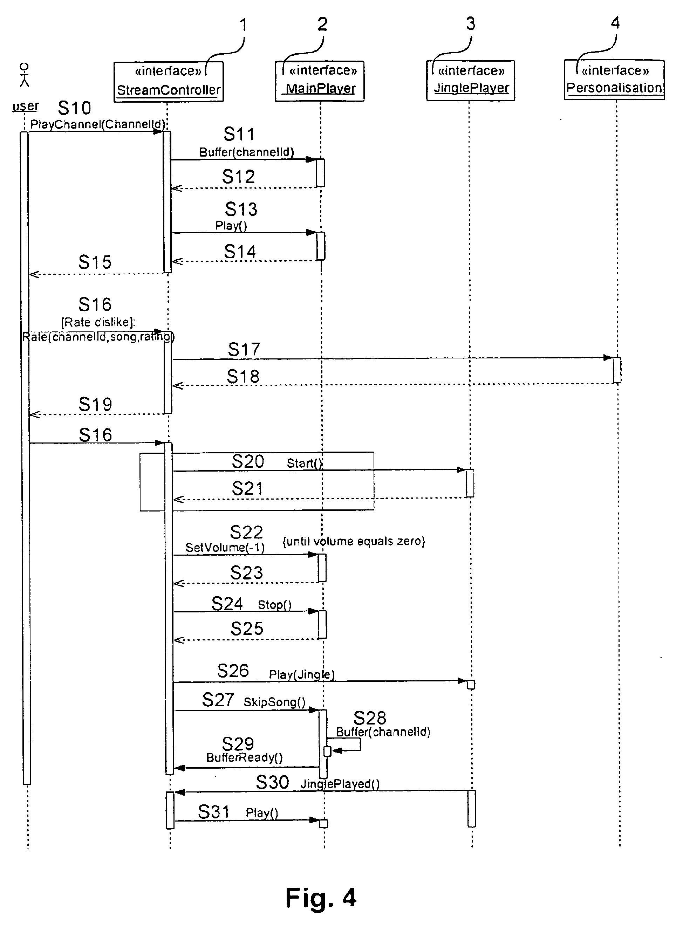

Fig. 4 shows a flow chart of implementation details of the content output processing in the content output device according to the preferred embodiment of the present invention shown in Fig. 1 by also indicating the interfaces used during the feedback processing. The single interfaces are referenced in Fig. 4 by the same reference numerals as the corresponding device or unit shown in Fig. 1. In particular, the content output device 1 comprises a stream controller interface that provides the stream control and user interaction, the first media player 2 comprises a main player interface, the second media player comprises a jingle player interface, and the first media source 4 comprises a personalisation interface.

In a first step S10 the user requests to play a particular content item channel with the stream controller interface 1. Thereafter, the stream controller interface 1 initiates to buffer this particular content item channel with the main player interface 2 in a following second step S11. After the main player interface 2 indicated completion of the buffering to the stream controller interface 1 in a following third step S12, the stream controller interface 1 initiates to play this particular content item channel with the main player interface 2 in a following fourth step S13. After the playing is started and this is confirmed from the main player interface 2 in a fifth step S14 to the stream controller interface 1, the stream controller interface 1 provides a respective feedback to the user in a following sixth step S15.

In case the user rates the currently played song with dislike in a following seventh step S16, the stream controller interface 1 initiates an update of the user profile with the personalisation interface 4 in a following eighth step S17. After the update of the user profile is confirmed from the personalisation interface 4 in a ninth step S18 to the stream controller interface 1, the stream controller interface 1 provides a respective feedback to the user in a following tenth step S19.

Simultaneously with the eighth step S17, the stream controller interface 1 initiates an initialization of the second media player 3 with the jingle player interface 3 in an eleventh step S20. After the initialization of the second media player 3 is confirmed from the jingle player interface 3 in a twelfth step S21 to the stream controller interface 1, the stream controller interface 1 instructs the main player interface 2 to fade out the currently played song in a following thirteenth step S22. After the fade out the currently played song is confirmed from the main player interface 2 in a fourteenth step S23 to the stream controller interface 1, the stream controller interface 1 instructs the jingle player interface 3 to play the jingle in a following fifteenth step S26.

Simultaneously with the fifteenth step S26, the stream controller interface 1 initiates a skipping of the currently streamed song with the main player interface 2 in a sixteenth step S27. Thereafter, the main player interface 2 initiates a buffering of the next streamed song in a following seventeenth step S28 and upon completion thereof confirms that the buffer is ready to the stream controller interface 1 in a following eighteenth step S29.

After the jingle player interface 3 indicated to the stream controller interface 1 that the jingle is played in a following nineteenth step S30, the stream controller interface 1 initiates a playing of the new song with the main player interface 2 in a twentieth step S30.

## Claims

1. Content output device for providing personalized content in accordance with user interaction, comprising a media player unit (2, 3) adapted to access first content items from a first media source (4) and to provide corresponding first content items as an output, wherein:
- said first media source (4) is located outside of said content output device (1) and is adapted to provide said first content items as a media stream to said media player unit (2, 3),
- said media player unit (2, 3) comprises buffer means adapted to buffer said first content items provided by said first media source (4) before said media player unit (2, 3) provides said first content items as an output,
said media player unit (2, 3) is further adapted to access at least one second content item from at least one second media source (5) and to provide (S26) corresponding second content item(s) as an output where the currently streamed first content item is skipped (S27) and the next streamed content item is buffered (S28),
- the second media source (5) is arranged within said content output device (1) and the second media source (5) is adapted to provide said second content item(s) as at least one corresponding direct accessible media file to said media player unit (2, 3) when said second content item(s) are provided to a user of the content output device (1).

2. Content output device according to claim 1, **characterized in that** said media player unit (2, 3) comprises a first media player (2) having access to said first content items from said first media source (4) and a second media player (3) having access to said second content items from said second media source (5).

3. Content output device according to claim 2, **characterized in that** said first media source (4) is adapted to chose said first content items to be provided in dependence on user feedback on first content items provided by said first media source (4) to said media player unit (2, 3) before.

4. Content output device according to claim 2 or 3, **characterized in that** said media player unit (2, 3) is adapted such that a first content item which is provided by said first media source (4) and which is currently output is fadeable out in response to user feedback received by the content output device (1) on first content items already provided.

5. Content output device according to any one of the claims 1 to 4, **characterized in that** said second media source (5) is adapted to load or download said second content items from remote.

6. Content output device according to claim 5, **characterized in that** at least one second content item is a jingle.

7. Method for providing personalized content to a user by means of a content output device, the method comprising the steps of:
- accessing first content items from a first media source (4) which is located outside of said content output device (1) and providing corresponding first content items as an output;
- wherein said first content items of said first media source (4) are received as a media stream
- buffering said first content items provided by said first media source before providing said first content items as an output,
- accessing at least one second content item from at least one second media source (5) which is arranged within the content output device (1) and providing corresponding second content item(s) as an output, wherein
- the second content items are provided (S26) from the second media source (5) where the currently streamed first content item is skipped (S27) and the next streamed content item is buffered (S28), wherein
- the second content items, when provided to a user, are provided at the content output device (1) from at least one corresponding direct accessible media file.

8. Method according to claim 7, **characterized by** fading out a currently output first content item after a change of said media stream has been initiated.

9. Method according to any claim 7 or 8, **characterized by** loading or downloading said second content items by said second media source (5) from remote.

10. Method according to claim 9, **characterized in that** at least one second content item is a jingle.

11. Computer program product, comprising computer program means adapted to perform the method steps as defined in any one of claims 7 to 10 when being executed on a computer or a digital signal processor.

12. Computer readable storage means, storing thereon a computer program product according to claim 11.

## Patentansprüche

1. Medienausgabevorrichtung zur Bereitstellung personalisierter Inhalte mit Benutzerinteraktion, umfassend eine Medienabspieleinheit (2, 3) ausgebildet zum Zugriff auf erste Inhaltsgegenstände von einer ersten Medienquelle (4) und zur Bereitstellung entsprechender erster Inhaltsgegenstände als Ausgabe, wobei:
- die erste Medienquelle (4) außerhalb der Medienausgabevorrichtung (1) angeordnet und zur Bereitstellung der ersten Inhaltsgegenstände als ein Medienstrom zu der Medienabspieleinheit (2, 3) ausgebildet ist,
- die Medienabspieleinheit (2, 3) eine Puffereinrichtung zum Puffern der von der ersten Medienquelle (4) bereitgestellten ersten Inhaltsgegenstände aufweist, bevor die Medienabspieleinheit (2, 3) die ersten Inhaltsgegenstände als Ausgabe bereitstellt,
- wobei die Medienabspieleinheit (2, 3) ferner zum Zugriff auf wenigstens einem zweiten Inhaltsgegenstand aus wenigstens einer zweiten Medienquelle (5) ausgebildet und zum Bereitstellen (S26) entsprechender zweiter Inhaltsgegenstände als eine Ausgabe ausgebildet ist, wenn der aktuelle erste Inhaltsgegenstand im Datenstrom übersprungen wird (S27) und der nächste Inhaltsgegenstand im Datenstrom gepuffert wird (S28),
- wobei die zweite Medienquelle (5) innerhalb der Medienausgabevorrichtung (1) angeordnet ist und die zweite Medienquelle (5) zum Bereitstellen des/der zweiten Inhaltsgegenstände als wenigstens eine entsprechende, direkt aufrufbare Mediendatei für die Medienabspieleinheit (2, 3) bereitstellt, wenn der/die zweiten Inhaltsgegenstände einen Benutzer der Medienausgabevorrichtung (1) bereitgestellt werden.

2. Medienausgabevorrichtung nach Anspruch 1, **dadurch gekennzeichnet, dass** die Medienabspieleinheit (2, 3) ein erstes Medienabspielgerät (2) mit Zugriff auf die ersten Inhaltsgegenstände von der ersten Medienquelle (4) und ein zweites Medienabspielgerät (3) mit Zugriff auf die zweiten Inhaltsgegenstände von der zweiten Medienquelle (5) aufweist.

3. Medienausgabevorrichtung nach Anspruch 2, **dadurch gekennzeichnet, dass** die erste Medienquelle (4) zum Auswählen der ersten Inhaltsgegenstände ausgebildet ist, die in Abhängigkeit einer Benutzerrückmeldung auf die von der ersten Medienquelle (4) der Medienabspieleinheit (2, 3) vorher bereitgestellten ersten Inhaltsgegenstände ausgebildet ist.

4. Medienausgabevorrichtung gemäß Anspruch 2 oder 3, **dadurch gekennzeichnet, dass** die Medienabspieleinheit (2, 3) derart ausgebildet ist, dass ein erster Inhaltsgegenstand, der von der ersten Medienquelle (4) bereitgestellt wird, und der aktuell ausgegeben wird, in Erwiderung auf eine durch die Medienausgabevorrichtung (1) empfangene Rückmeldung auf die ersten bereitgestellten Inhaltsgegenstände ausblendbar ist.

5. Medienausgabevorrichtung nach einem der Ansprüche 1 bis 4, **dadurch gekennzeichnet, dass** die zweite Medienquelle (5) zum entfernten Rauf- oder Runterladen der zweiten Inhaltsgegenstände ausgebildet ist.

6. Medienausgabevorrichtung nach Anspruch 5, **dadurch gekennzeichnet, dass** wenigstens ein zweiter Inhaltsgegenstand ein Jingle ist.

7. Verfahren zum Bereitstellen von personalisierten Inhalten für einen Benutzer mittels einer Medienausgabevorrichtung, wobei das Verfahren folgende Schritte umfasst:
- Zugreifen auf erste Inhaltsgegenstände von einer ersten Medienquelle (4), die außerhalb der Medienausgabevorrichtung (1) angeordnet ist und Bereitstellen entsprechender erster Inhaltsgegenstände als Ausgabe,
- wobei die ersten Inhaltsgegenstände der ersten Medienquelle (4) als Medienstrom empfangen werden,
- Puffern der durch die erste Medienquelle bereitgestellten Inhaltsgegenstände, bevor die ersten Inhaltsgegenstände als Ausgabe bereitgestellt werden,
- Zugreifen auf wenigstens einen zweiten Inhaltsgegenstand von zumindest einer zweiten Medienquelle (5), die innerhalb der Medienausgabevorrichtung (1) angeordnet ist und Bereitstellen eines/einer entsprechender zweiter Inhaltsgegenstände als Ausgabe, wobei
- die zweiten Inhaltsgegenstände von der zweiten Medienquelle (5) bereitgestellt werden (S26), wenn der aktuell als Strom (streaming) übertragene Inhaltsgegenstand übersprungen wird (S27) und der nächste als Strom übermittelte Inhaltsgegenstand gepuffert wird (S28), wobei
- die zweiten Inhaltsgegenstände an der Medienausgabevorrichtung (1) von wenigstens einem entsprechenden direkt zugreifbaren Mediendatei bereitgestellt werden, wenn sie dem Benutzer bereitgestellt werden.

8. Verfahren nach Anspruch 7, **gekennzeichnet durch** Ausblenden eines aktuell ausgegebenen ersten Inhaltsgegenstandes, nachdem eine Änderung des Medienstroms initiiert worden ist.

9. Verfahren nach einem der Ansprüche 7 oder 8, **gekennzeichnet durch** entferntes Rauf- oder Runterladen der zweiten Inhaltsgegenstände **durch** die zweite Medienquelle (5).

10. Verfahren nach Anspruch 9, **dadurch gekennzeichnet, dass** zumindest der zweite Inhaltsgegenstand ein Jingle ist.

11. Computerprogrammprodukt umfassend eine Computerprogrammeinrichtung ausgebildet zum Ausführen der Verfahrensschritte wie in einem der Ansprüche 7 bis 10 definiert, wenn es auf einem Computer oder auf einem digitalen Signalprozessor ausgeführt wird.

12. Computerlesbares Speichermittel auf dem ein Computerprogrammprodukt gemäß Anspruch 11 gespeichert ist.

## Revendications

1. Dispositif de sortie de contenu pour fournir un contenu personnalisé en accord avec une interaction d'un utilisateur, comprenant une unité de lecture de média (2, 3) adaptée à accéder à des premiers articles de contenu depuis une source de média (4) et fournir des premiers articles de contenu à titre de sortie, dans lequel :
- ladite première source de média (4) est située à l'extérieur dudit dispositif de sortie de contenu (1) et est adaptée à fournir lesdits premiers articles de contenu sous forme de flux de média vers ladite unité de lecture de média (2, 3),
- ladite unité de lecture de média (2, 3) comprend des moyens formant tampon adapté à tamponner lesdits premiers articles de contenu fournis par ladite première source de média (4) avant que ladite unité de lecture de média (2, 3) fournisse lesdits premiers articles de contenu à titre de sortie,
- ladite unité de lecture de média (2, 3) est en outre adaptée à accéder à au moins un second article de contenu depuis au moins une seconde source de média (5) et à fournir (S26) un ou plusieurs article(s) de contenu correspondant(s) à titre de sortie lorsqu'on saute (S27) le premier article de contenu actuellement reçu sous forme de flux et que l'article de contenu suivant reçu sous forme de flux est tamponné (S28),
- la seconde source de média (5) est agencée à l'intérieur dudit dispositif de sortie de contenu (1) et la seconde source de média (5) est adaptée à fournir lesdits seconds articles de contenu sous forme d'au moins un fichier de média correspondant directement accessible à ladite unité de lecture de média (2, 3) lorsque ledit/lesdits second(s) article(s) de contenu est/sont fourni(s) à un utilisateur du dispositif de sortie de contenu (1).

2. Dispositif de sortie de contenu selon la revendication 1, **caractérisé en ce que** ladite unité de lecture de média (2, 3) comprend un premier lecteur de média (2) ayant accès auxdits premiers articles de contenu depuis ladite première source de média (4) et un second lecteur de média (3) ayant accès auxdits seconds articles de contenu depuis ladite seconde source de média (5).

3. Dispositif de sortie de contenu selon la revendication 2, **caractérisé en ce que** ladite première source de média (4) est adaptée à choisir lesdits premiers articles de contenu à fournir en dépendance d'une action en retour de l'utilisateur sur lesdits premiers articles de contenu fournis par ladite première source de média (4) vers ladite unité de lecture de média (2, 3) auparavant.

4. Dispositif de sortie de contenu selon la revendication 2 ou 3, **caractérisé en ce que** ladite unité de lecture de média (2, 3) est adaptée de telle façon qu'un premier article de contenu qui est fourni par ladite première source de média (4) et qui est actuellement sorti est susceptible d'être fondu en réponse à une action en retour de l'utilisateur reçue par le dispositif de sortie de contenu (1) sur des premiers articles de contenu déjà fournis.

5. Dispositif de sortie de contenu selon l'une quelconque des revendications 1 à 4, **caractérisé en ce que** ladite seconde source de média (5) est adaptée à charger ou à télécharger lesdits seconds articles de contenu depuis un emplacement à distance.

6. Dispositif de sortie de contenu selon la revendication 5, **caractérisé en ce qu'**au moins un second article de contenu est un sonal.

7. Procédé pour fournir des contenus personnalisés à un utilisateur au moyen d'un dispositif de sortie de contenu, le procédé comprenant les étapes consistant à :
- accéder à des premiers articles de contenu depuis une première source de média (4) qui est située à l'extérieur dudit dispositif de sortie de contenu (1), et fournir des premiers articles de contenu correspondant à titre de sortie ;
- dans lequel lesdits premiers articles de contenu de ladite première source de média (4) sont reçus sous forme d'un flux de média,
- tamponner lesdits premiers articles contenus fournis par ladite première source de média avant de fournir lesdits premiers articles de contenu à titre de sortie,
- accéder à au moins un second article de contenu depuis au moins une seconde source de média (5) qui est agencée à l'intérieur du dispositif de sortie de contenu (1), et fournir un ou plusieurs second(s) article(s) de contenu correspondant(s) à titre de sortie, dans lequel
- les seconds articles de contenus sont fournis (S26) depuis la seconde source de média (5) lorsque que le premier article de contenu en cours de lecture sous forme de flux est sauté (S27) et l'article de contenu suivant reçu sous forme de flux est tamponné (S28), dans lequel
- les seconds articles de contenu, lorsqu'ils sont fournis un utilisateur, sont fournis au dispositif de sortie de contenu (1) depuis au moins un fichier de média correspondant directement accessible.

8. Procédé selon la revendication 7, **caractérisé en ce que** l'on effectue un fondu d'un premier article de contenu actuellement sorti après avoir démarré un changement dudit flux de média.

9. Procédé selon l'une quelconque des revendications 7 ou 8, **caractérisé en ce que** l'on charge ou on télécharge lesdits seconds articles de contenu par ladite seconde source de média (5) depuis une position à distance.

10. Procédé selon la revendication 9, **caractérisé en ce qu'**au moins un second article de contenu est un sonal.

11. Produit de programme d'ordinateur, comprenant des moyens formant programme d'ordinateur adaptés à mettre en oeuvre les étapes du procédé tel que défini selon l'une quelconque des revendications 7 à 10 lorsqu'il est exécuté sur un ordinateur ou un processeur de signaux numérique.

12. Moyens de stockage lisibles à l'ordinateur, sur lesquels est stocké un produit de programme d'ordinateur selon la revendication 11.
